# EUROPÄISCHE PATENTSCHRIFT

(11) **EP 1 734 640 B1**
(45) Veröffentlichungstag und Bekanntmachung des Hinweises auf die Patenterteilung: **07.01.2015**
(21) Anmeldenummer: 06011584.7
(22) Anmeldetag: 03.06.2006
(51) Int. Cl.: H02K 5/22, H02K 11/04

(54) **Vorrichtung zum Halten eines elektronischen Geräts an einem Elektromotor**
Device for fixing an electrical apparatus to an electric motor
Dispositif permettant de fixer un appareil électrique à un moteur électrique

(30) Priorität: 17.06.2005 DE 102005028426; 17.05.2006 DE 102006023050
(43) Veröffentlichungstag der Anmeldung: 20.12.2006
(73) Patentinhaber: KSB Aktiengesellschaft, 67227 Frankenthal (DE)
(72) Erfinder: Gröning, Norbert, 67227 Frankenthal (DE); Köhler, Bernd, 66969 Lemberg (DE); Hebel, Norbert, 67158 Ellerstadt (DE); Krellner, Markus, 91278 Pottenstein (DE); Gontermann, Daniel, 67227 Frankenthal (DE); Schuhmacher, Volker, 66802 Überherrn (DE)

(56) Entgegenhaltungen:
- EP-A1- 0 917 276
- DE-A1- 2 414 664
- DE-A1- 3 602 606
- DE-A1- 3 823 350
- FR-A1- 2 517 129
- FR-A1- 2 756 676
- US-A- 2 003 031

## Beschreibung

Die Erfindung betrifft ein Elektromotorenaggregat mit einer Haltevorrichtung für die Befestigung eines elektronischen Geräts, insbesondere eines Frequenzumrichters, an einem luftgekühlten, mit Kühlrippen versehenen Elektromotor, insbesondere Normmotor, wobei zwischen Gerät und Elektromotor ein mit dem Gerät verbundenes Aufnahmeelement und mehrere, mit dem Aufnahmeelement verbundene, am Elektromotor anliegende Halteelemente angeordnet sind, die den Abstand zwischen Gerät und Elektromotor überbrücken, wobei die Halteelemente an und/oder in konstruktiven Freiräumen des Elektromotors kräfteübertragend anliegen und die Halteelemente seitlich abstehende Vorsprünge aufweisen und dass bei montierten Halteelementen die Vorsprünge einander zugekehrt sind.

Elektromotoren, und auch die Normmotoren, weisen unterschiedliche äußere Gestaltungen auf. Um an solchen Motoren fallweise oder nachträglich elektronische Geräte, wie Frequenzumrichter oder andere automatisierungstechnische Geräte, zu befestigen, sind Anpassungskonstruktionen erforderlich. Zumal die Geräte der diversen Hersteller unterschiedliche Formen und Abmessungen aufweisen. Das Produkt Hya-Drive, bekannt durch den KSB-Prospekt Regelung: "Alles perfekt geregelt: Schalt- und Regelsysteme für alle Pumpen", vom Mai 2003, Seiten 6-7, sieht zum einen die Befestigung eines Frequenzumrichters in axialer Verlängerung des Elektromotorgehäuses über ein spezielles, das normale Lüftergehäuse ersetzendes Adaptergehäuse vor. Das ursprüngliche Motorlüftergehäuse wird bei der Montage gegen ein spezielles Adaptergehäuse getauscht. Zum anderen ist die Verwendung von Befestigungsstegen vorgesehen, mit denen das Gehäuse des Frequenzumrichters durch mehrere Schraubverbindungen am Elektromotor fixiert ist. Dies erfordert jedoch eine nachträgliche bauliche Veränderung am Elektromotor, wodurch zertifizierte Anwendungen eines Elektromotors ausgeschlossen sein können. Und es müssen eine Vielzahl von speziellen, je nach Baugröße völlig unterschiedlichen Haltevorrichtungen hergestellt oder bevorratet werden, um im Einzelfall eine schnelle Anpassung zu erreichen.

Nachteilig sind neben der baulichen Veränderung am Motorgehäuse auch die zusätzlichen Fertigungsschritte für das Bohren von Befestigungslöchern. Die Befestigung an den unterschiedlichen Bauformen der verschiedenen Elektromotoren gestaltet sich schwierig. Weiterhin ist aufgrund des großen angebotenen Leistungsspektrums und der dadurch unabdingbaren Baugrößenvielfalt ein erhöhter Material- und Werkzeugeinsatz die Folge.

Ein gemäß dem Oberbegriff des Anspruchs 1 gattungsbildendes Elektromotorenaggregat ist aus der FR 2 756 676 A1 bekannt.

Die DE 38 23350 A1, US 2 003 031 A, DE 24 14 664 A1, FR 2 517 129 A1, EP 0 917 276 A1 und die DE 36 02 606 A1 zeigen andere Lösungen für die Befestigung eines Geräts an einem Elektromotor.

Der Erfindung liegt somit das Problem zu Grunde, eine Haltevorrichtung zu entwickeln, die für eine Elektromotoren-Baureihe mit verschiedenen Baugrößen in einfacher Weise und ohne eine Änderung am Elektromotor die nachträgliche Befestigung von elektronischen Geräten ermöglicht.

Die Lösung dieses Problems sieht vor, dass die Vorsprünge an den Kühlrippen als begrenzende Konturen der Freiräume anliegen oder die als Stiftelemente ausgebildeten Vorsprünge in in Flächen als Gewinde-Sacklöcher ausgebildeten Freiräumen formschlüssig gehalten werden.

Mit dieser Lösung ist es möglich, ein beliebiges, automatisierungstechnisches Gerät, wie ein Steuer-, Regel- oder Kommunikationsgerät, ein Diagnosegerät oder einen Frequenzumrichter problemlos an einem Motorgehäuse zu befestigen. Durch Bevorratung von einem Aufnahmeelement, an dem ein Gerät befestigt wird, und der Kombination des Aufnahmeelements mit mehreren Halteelementen, die an und/oder in konstruktiven Freiräumen eines Elektromotors kräfteübertragend anliegen, ist eine nachträgliche oder zusätzliche Bearbeitung des Elektromotors nicht mehr erforderlich. Je nach Baugröße eines Elektromotors oder eines anzuordnenden Geräts werden einfach andere Halteelemente ausgewählt. Letztere werden in einen konstruktiven Motorfreiraum, beispielsweise zwischen zwei Kühlrippen eines Elektromotors, eingehakt und mit dem Aufnahmeelement verbunden.

Somit ist eine einfache und schnelle Montage gewährleistet. Eine so gebildete Haltevorrichtung wird am Elektromotor ohne dessen bauliche Veränderung befestigt. Dadurch ist eine Grundvoraussetzung für spezielle Anwendungsgebiete, wie ein Einsatz in einem explosionsgefährdeten Bereich gegeben. Gegenüber den herkömmlichen Haltevorrichtungen kann mit dieser Lösung bei einem geringeren Material und Werkzeugeinsatz eine Vielzahl von Kombinationen erstellt werden, die für elektronische Geräte deren Befestigung an verschiedenen Elektromotoren ermöglicht.

Ausgestaltungen sehen eine rahmen- oder plattenförmige Ausbildung des Aufnahmeelements vor. Hierbei kann das plattenförmige Aufnahmeelement rasterförmig angeordnete Öffnungen unterschiedlicher Form zur Durchführung von Befestigungselementen aufweisen. Solche Öffnungen können nach Art eines Bohrbildes angeordnet sein, welchen einem Befestigungsraster verschiedener Geräte entsprechen, die mit Schrauben im Aufnahmeelement gehalten sind. Die Öffnungen können als runde oder ovale Öffnungen oder Schlitze ausgebildet sein, um durch deren Form eine Vielzahl von Befestigungsmöglichkeiten zu erreichen. Ebenso können die Halteelemente mit diesen Öffnungen kräfteübertragend verbunden werden.

Nach einer weiteren Ausgestaltung greifen die Vorsprünge in vorhandene Freiräume des Elektromotorgehäuses formschlüssig ein. Die Vorsprünge sind beiderseits der Motorlängsachse angeordnet. Somit kann durch einfaches Einhaken der Vorsprünge zwischen die Kühlrippen eines Elektromotors eine Befestigung an demselben erreicht werden.

Die Vorsprünge können sich auch auf vorhandene Freiräume des Elektromotors begrenzende Konturen abstützen. Somit können die Halteelemente mit den Vorsprüngen beispielsweise die Motorkühlrippen umgreifen und/oder sich mit den Vorsprüngen auf den Motorkühlrippen abstützen.

Die Vorsprünge können integraler Bestandteil eines Halteelementes sein, oder als Zusatzteil daran befestigt werden. Die Halteelemente können auch mehrere Befestigungsöffnungen aufweisen, die eine Befestigung der Vorsprünge in unterschiedlichen Höhen ermöglicht. Die Vorsprünge sind als vom Halteelement seitlich abstehende Leistenelemente, oder Stift- oder Zahnelemente ausgebildet oder weisen eine Form auf, die eine sichere und kräfteübertragende Verbindung herstellt. Auch ist es möglich, die Vorsprünge aus axialer Richtung in die Freiräume zwischen den Kühlrippen einzuschieben.

Nach einer weiteren Ausgestaltung erfolgt die Befestigung mittels Vorsprüngen, die als Klammerelemente ausgebildet sind. Solche auf die Motorkühlrippen aufsteckbaren Klammerelemente, die beispielsweise aus Stahl bestehen, vereinfachen die Montage der Halteelemente an den Elektromotor erheblich, da diese mittels eines Schlagwerkzeuges, wie eines Hammers, schnell und einfach an den Kühlrippen oder anderen Stellen des Elektromotors befestigt werden. Die Klammerkräfte wirken von Ober- und/oder Unterseite auf die begrenzenden Konturen der Freiräume und unterstützen so die formschlüssige Befestigung.

Neben der Möglichkeit, dass die Vorsprünge in Freiräume zwischen Motorkühlrippen haltend eingreifen, besteht die Möglichkeit, dass stiftförmige Vorsprünge in Freiräume in Form vorhandener Befestigungsöffnungen des Motorgehäuses eingreifen und darin formschlüssig gehalten sind. An Elektromotoren, insbesondere an Normmotoren, sind häufig mehrere Befestigungsebenen auf den Außenseiten angeordnet, an denen im Bedarfsfall Motorfüße angeschraubt werden. Diese Ebenen können einander gegenüber liegen, oder bei einer Ansicht gemäß einem Koordinatensystem, liegen sie in zwei, drei oder vier Quadranten. In diesen Befestigungsebenen sind die Motorgehäuse zwecks Aufnahme von Schraubelementen mit vorgefertigten Gewindelöchern versehen. Darin eingetriebene, stiftförmige Vorsprünge gewährleisten eine sichere Befestigung der Halteelemente und damit auch des elektronischen Geräts. Für Sicherungszwecke genügt es, wenn in vorhandene Motorgehäuseöffnungen eingreifende, selbstfurchende Schrauben die Halteelemente am Elektromotor sichern. Nach einer alternativen Ausgestaltung weisen die Vorsprünge Widerhaken oder Spitzen auf. Diese krallen sich in die vorhandene Freiräume des Elektromotors begrenzende Konturen.

Nach einer anderen Ausgestaltung sind die Halteelemente als Abstandshalter zwischen dem Aufnahmeelement und dem Elektromotor angeordnet, wobei in vorhandene Befestigungsöffnungen eingreifende Schraubelemente das Aufnahmeelement mit dem Elektromotor verbinden. Dabei werden die Schraubelemente durch passende Öffnungen des Aufnahmeelementes hindurch geführt und in die Befestigungsöffnungen für Motorfüße eingeschraubt. Die Halteelemente sind in diesem Fall als den Abstand gewährleistende Leisten, Vorsprünge, Zähne, Stifte oder als die Schraubelemente umgebende Rohrstücke ausgebildet, wobei die Abstandshalter kräfteübertragend zwischen Aufnahmeelement und Elektromotor anliegen.

Eine universelle Befestigungsmöglichkeit wird durch die Ausgestaltung erreicht, dass die Halteelemente als Abstandshalter zwischen dem Aufnahmeelement und dem Elektromotor angeordnet sind, wobei mindestens eine Spannbefestigung das Aufnahmeelement mit dem Elektromotor verbindet. Die Spannbefestigung besteht aus einem Spannband und einem Spann-/Verbindungsmittel.

Zweckmäßigerweise weisen die Abstandshalter Aussparungen zum Durchführen des Spannbandes auf und die Spannbefestigung ist um den Elektromotor geführt. Durch Spannen der Spannbefestigung werden die Halteelemente fest an den Elektromotor gezogen und ein elektronisches Gerät ist einfach und sicher am Elektromotor befestigt.

Durch eine weitere Ausgestaltung werden die Vibrationseigenschaften der Haltevorrichtung verbessert. Dazu ist vorgesehen, dass zwischen den Halteelementen und/oder der Spannbefestigung und dem Elektromotor Dämpfungsmittel angeordnet sind.

Ausführungsbeispiele der Erfindung sind in den Zeichnungen dargestellt und werden im folgenden näher beschrieben. Es zeigen die
- Fig. 1 - 3: verschiedene Bauformen montierter Haltevorrichtungen, die
- Fig. 4 - 5: zwei Ausführungsformen von Aufnahmeelementen und die
- Fig. 6 - 9: verschiedene Ausführungsformen von Halteelementen, die
- Fig. 10: eine weitere Bauform einer montierten Haltevorrichtung, die
- Fig. 11: eine weitere Ausführungsform einer Haltevorrichtung und die
- Fig. 12, 13: eine montierte Haltevorrichtung mit Spannbefestigung.

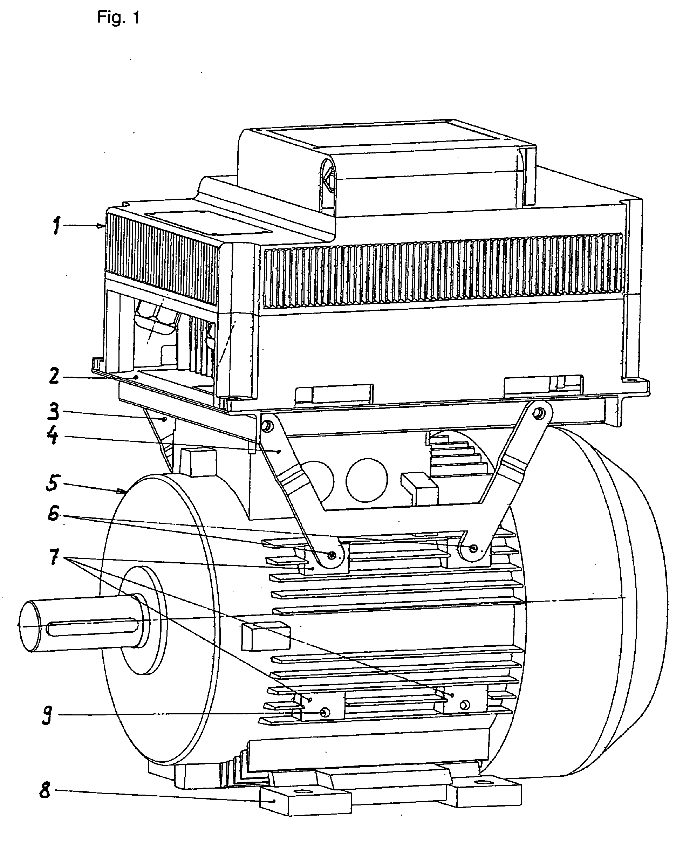

Fig. 1 zeigt ein montiertes Elektromotorenaggregat. Dabei ist ein elektronisches Gerät 1, hier ein Frequenzumrichter, mit einem - hier rahmenförmigen - Aufnahmeelement 2 und mehreren, hier zwei Halteelementen 3, 4, an einem als Normmotor gestalteten Elektromotor 5 befestigt. Die Halteelemente 3, 4 weisen als Stiftelemente ausgebildete Vorsprünge 6 auf. Die Halteelemente 3, 4 sind mit dem Aufnahmeelement 2 durch an sich bekannte Mittel verbunden, dies können Schrauben, Nieten, Stifte, Schweißverbindungen oder dergleichen sein. Weiterhin verfügt der Elektromotor 5 über vier Flächen 7, die in einer Befestigungsebene liegen. Diese Befestigungsebene steht senkrecht zur Ebene der Motorfüße 8. Eine analoge Anordnung der Flächen 7 befindet sich auf der gegenüberliegenden, hier nicht sichtbaren Motorseite. Durch die hier insgesamt drei Befestigungsebenen besteht die Möglichkeit, durch entsprechende Anordnung der Motorfüße 8 den Elektromotor 5 in drei verschiedenen Aufstellebenen zu befestigen.

Die Flächen 7 verfügen ab Werk über Befestigungsöffnungen 9, gewöhnlich Gewinde-Sacklöcher, die zur Aufnahme von Schrauben dienen, mit denen die Motorfüße 8 wahlweise befestigt werden. Die Befestigungsöffnungen 9 sind ebenfalls konstruktive Freiräume 13, wenn sie nicht benutzt werden. Die stiftförmigen Vorsprünge 6 der Halteelemente 3, 4 sind in diesen Freiräumen oder Befestigungsöffnungen durch Eingriff formschlüssig gehalten. Somit wird eine sichere Befestigung des Frequenzumrichters 1 erreicht.

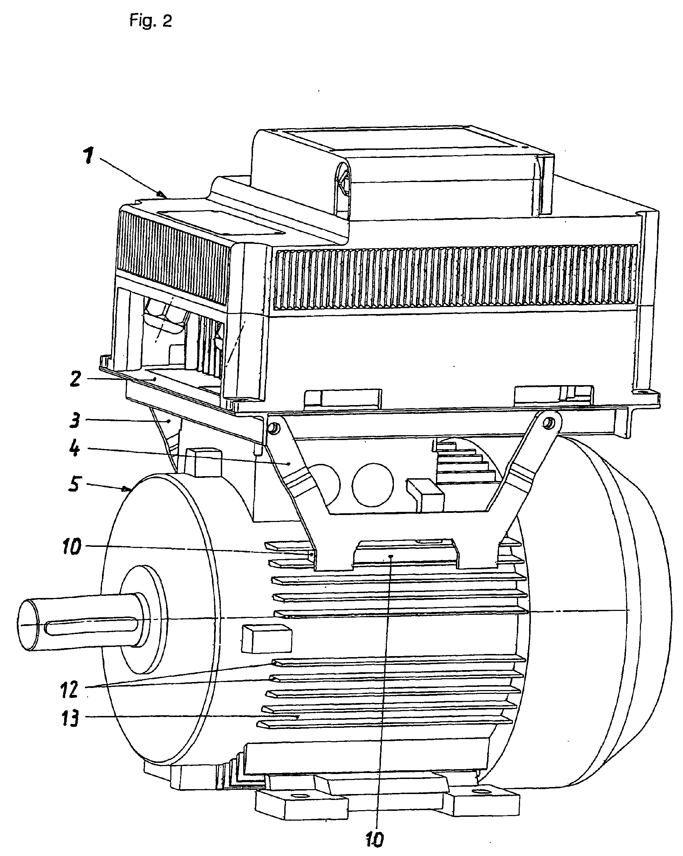

Fig. 2 zeigt eine Haltevorrichtung, bei der im Unterschied zu Fig. 1 die Halteelemente 3, 4 mit leistenförmigen Vorsprüngen 10, 11 versehen sind. In diesem Ausführungsbeispiel sind aufgrund der Form der Kühlrippen 12 des Elektromotors 5 die als Einzelteile gestalteten Vorsprünge 10, 11 keilförmig ausgebildet. Sie sind durch an sich bekannte Mittel mit den Halteelementen 3, 4 verbunden. Ebenso gut können sie mit den Halteelementen einteilig gestaltet sein. Die Kühlrippen 12 weisen die bei Elektromotoren üblichen Freiräume 13 auf. In diese werden die Vorsprünge 10, 11 der Halteelemente 3, 4 bei der Montage aus axialer Richtung eingeschoben. Die Vorsprünge 10, 11 greifen in die Freiräume 13 ein oder umgreifen die Kühlrippen 12 und halten dadurch die Halteelemente 3, 4 formschlüssig am Motorgehäuse. Diese formschlüssige Verbindung erspart die herkömmlichen, montageaufwendigen Befestigungsarten.

Solche Halteelemente 3, 4, die beispielsweise für eine Baugröße mit vorgegebenen Außendurchmessern ausgelegt sind und einen vorgegebenen Abstand zwischen den Vorsprüngen aufweisen, können bei größeren Gehäusedurchmessern im Bereich von Kühlrippen 12 montiert werden, die oberhalb eines größeren Gehäusedurchmessers angeordnet sind. Somit ist eine Haltevorrichtung für verschiedene Elektromotorgrößen anwendbar.

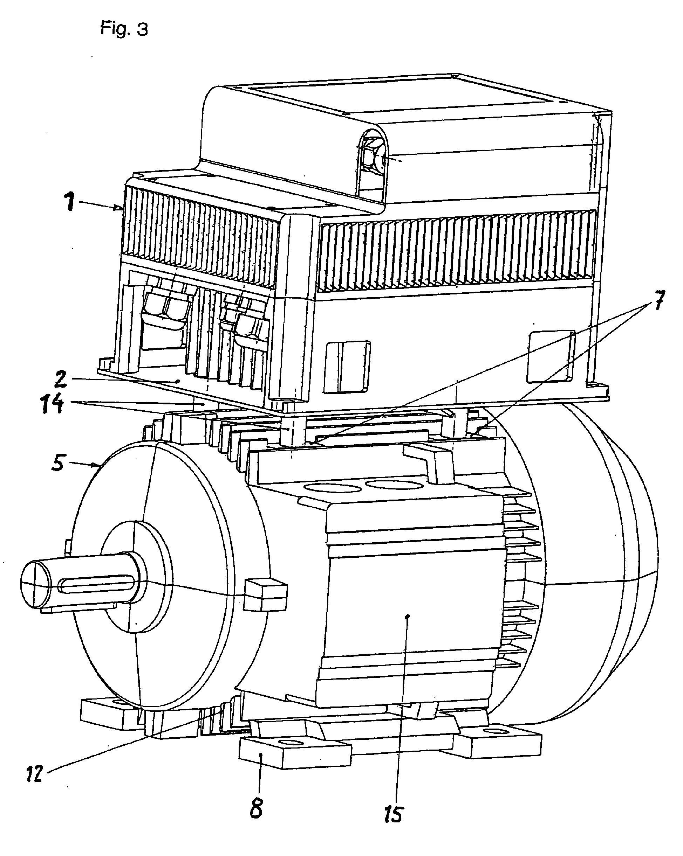

Fig. 3 zeigt eine andere Haltevorrichtung, bei der zwischen einem - hier plattenförmigen - Aufnahmeelement 2 und dem Elektromotor 5 die Halteelemente als Abstandshalter 14 ausgebildet sind. Hierbei sind Schraubelemente durch passende Öffnungen des Aufnahmeelements 2 hindurchgeführt und in die Befestigungsöffnungen 9 der Flächen 7 eingeschraubt. Im Unterschied zu Fig. 1 und Fig. 2 ist hier der Elektromotor 5 um 90° gedreht aufgestellt. Infolgedessen wurden die Motorfüße 8 gemäß Fig. 1 ebenfalls in einer um 90° gedrehten Anordnung befestigt. Dadurch kommt der Klemmenkasten 15 aus einer oberen Lage gemäß Fig. 1 und Fig. 2 in eine seitliche Anordnung zu liegen. Die Halteelemente 14 können sich sowohl zwischen den Kühlrippen 12 in den Freiräumen 13, auf den Kühlrippen 12 als auch auf den Flächen 7 abstützen. In dem gezeigten Ausführungsbeispiel sind die Halteelemente 14 als Rohrstücke ausgebildet, welche - hier nicht dargestellte - Befestigungsschrauben umgeben. Solche Schrauben sind in die Befestigungsöffnungen 9 der Flächen 7 eingeschraubt und verbinden das Aufnahmeelement 2 und/oder den Frequenzumrichter 1 mit dem Elektromotor 5.

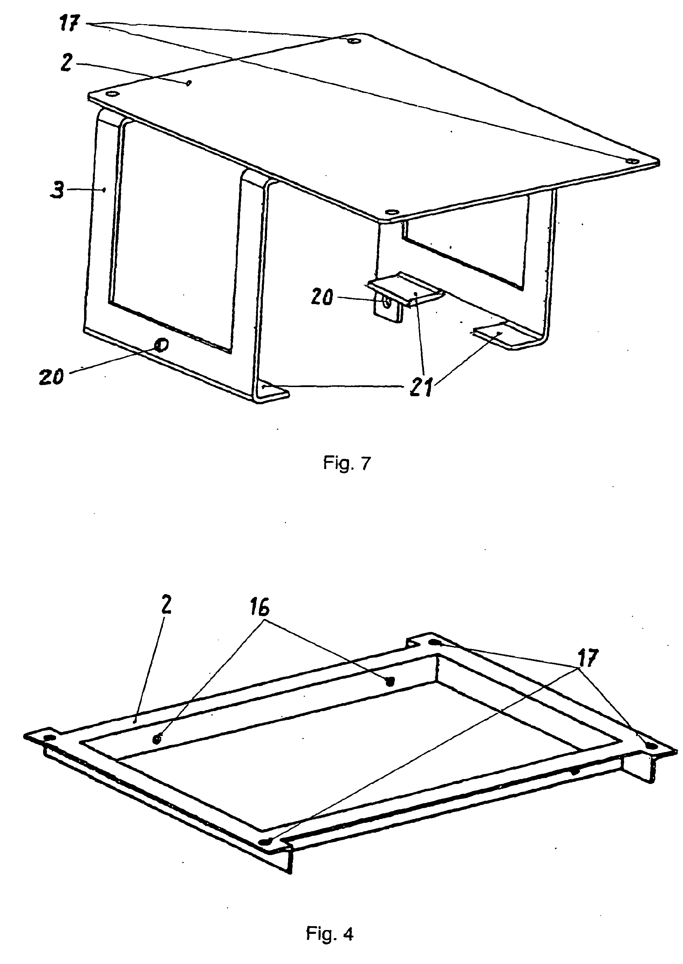

Fig. 4 zeigt ein rahmenförmiges Aufnahmeelement 2 mit Öffnungen 16 zur Verbindung mit Halteelementen. Das Aufnahmeelement 2 weist vier andere Öffnungen 17 zur Anbringung eines elektronischen Geräts, wie eines Frequenzumrichters, auf.

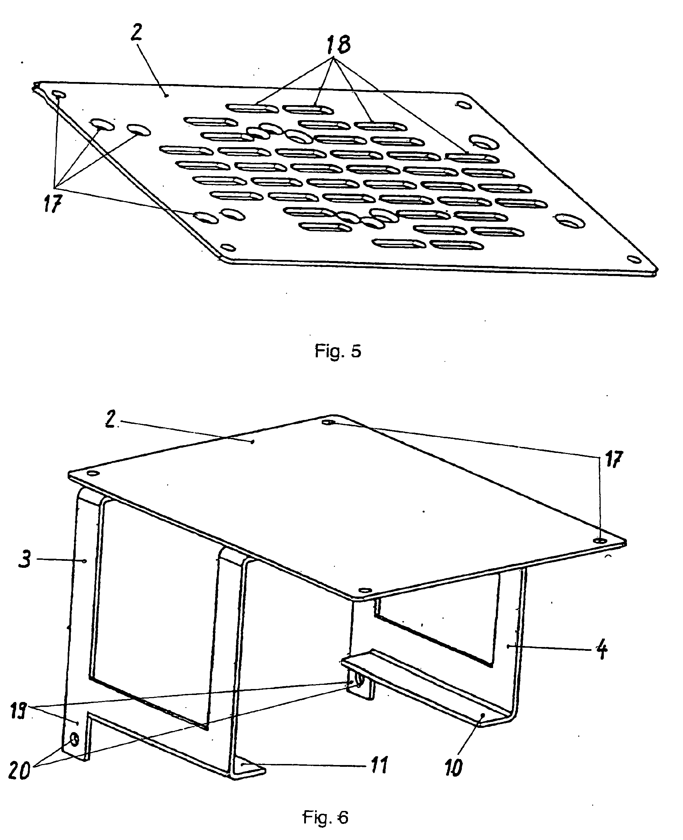

Fig. 5 zeigt ein plattenförmiges Aufnahmeelement 2 mit mehreren runden Öffnungen 17 und Schlitzen 18 zur Durchführung von Befestigungselementen.

Fig. 6 zeigt eine Abwandlung einer Haltevorrichtung gemäß Fig. 2 mit plattenförmigem Aufnahmeelement 2 und Halteelementen 3, 4. Die Halteelemente 3, 4 sind als seitlich abstehende und einander zugekehrte, leistenförmige Vorsprünge 11, 10 ausgebildet. Zusätzlich weisen die Halteelemente 3, 4 Sicherungslaschen 19 mit Öffnungen 20 auf. Durch die Öffnung 20 hindurchgeführte Befestigungselemente in Form von selbstfurchenden Schrauben greifen in andere vorhandene Befestigungsöffnungen 9 des Motorgehäuses ein, um eine zusätzliche Sicherung der Halteelemente 3, 4 am Elektromotor 5 zu erreichen.

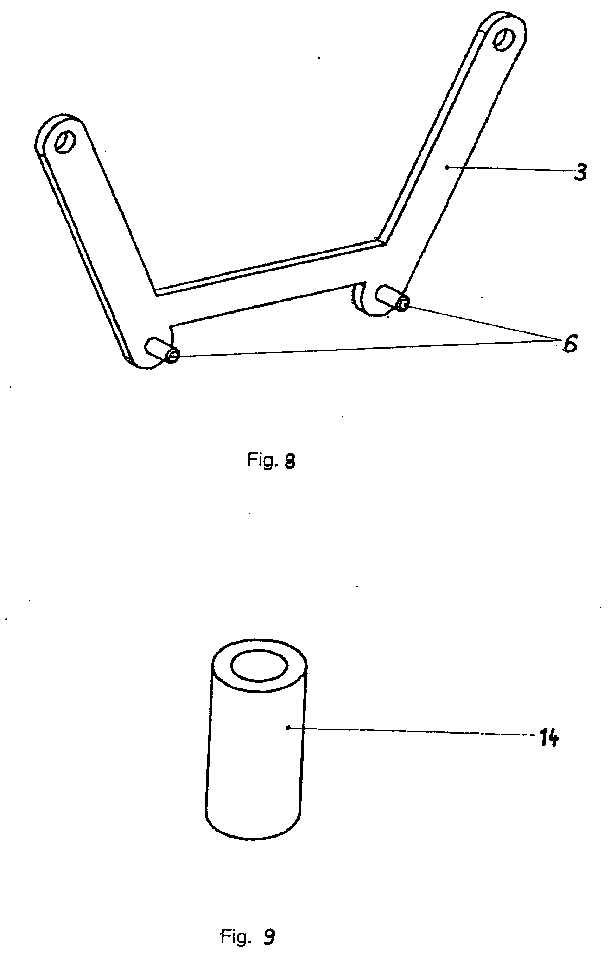

Fig. 7 zeigt Halteelemente 3, 4 mit seitlich abstehenden Zahnelementen 21 als Vorsprünge. Diese können durch Materialaussparungen aus den in Fig. 6 gezeigten leistenförmigen Vorsprüngen 10, 11 erzeugt sein. Fig. 7 zeigt verschiedene Anordnungen von Öffnungen 20 für Sicherungszwecke. Fig. 8 zeigt eine Variante eines Halteelements 3 mit als Stiftelementen 6 ausgebildeten Vorsprüngen. Und Fig. 9 zeigt ein als rohrförmigen Abstandshalter ausgebildetes Halteelement 14.

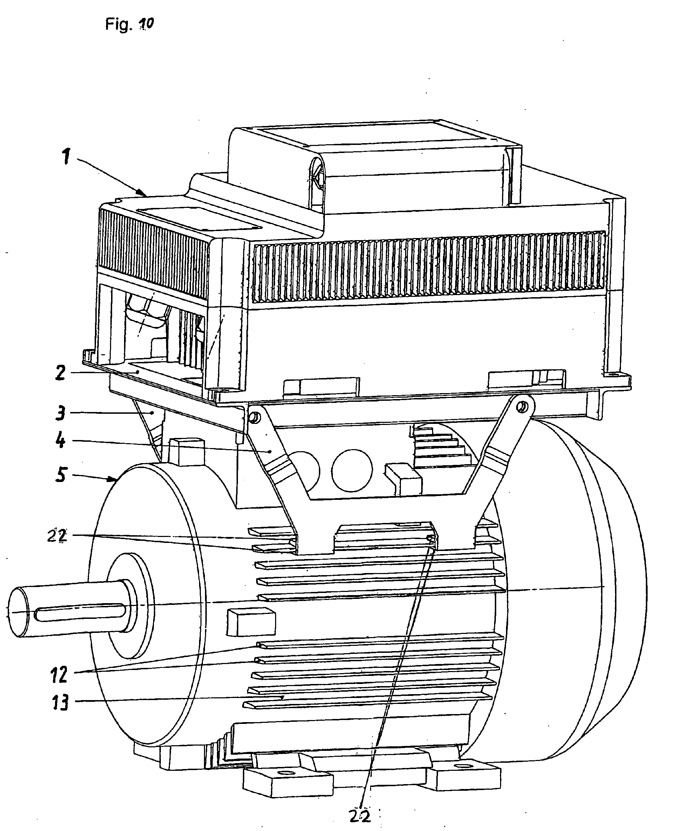

Fig. 10 zeigt ein montiertes Elektromotorenaggregat. Dabei ist ein elektronisches Gerät 1 mit einem - hier rahmenförmigen - Aufnahmeelement 2 und mehreren, hier zwei Halteelementen 3, 4, an einem als Normmotor gestalteten Elektromotor 5 befestigt. Die Halteelemente 3, 4 weisen als Klammerelemente ausgebildete Vorsprünge 22 auf. Die Halteelemente 3, 4 sind mit dem Aufnahmeelement 2 durch an sich bekannte Mittel verbunden, dies können Schrauben, Nieten, Stifte, Schweißverbindungen oder dergleichen sein. Die Vorsprünge 22 sind durch an sich bekannte Mittel mit den Halteelementen 3, 4 verbunden. Ebenso gut können sie mit den Halteelementen 3, 4 einteilig gestaltet sein. Die Kühlrippen 12 weisen die bei Elektromotoren üblichen Freiräume 13 auf. Die Vorsprünge 22 liegen an den Kühlrippen 12 als begrenzende Konturen der Freiräume an. Die Klammern können mit einem Hammer oder einem anderen Schlagwerkzeug auf die Motorkühlrippen 12 geschlagen oder auf diese geschoben werden. Die Vorsprünge 22 umgreifen die Kühlrippen 12 und halten dadurch die Halteelemente 3, 4 formschlüssig am Motorgehäuse. Diese formschlüssige Verbindung erspart die herkömmlichen, montageaufwendigen Befestigungsarten. Die Klammerkräfte wirken von Ober- und/oder Unterseite auf die begrenzenden Konturen der Freiräume und unterstützen die formschlüssige Befestigung.

Solche Halteelemente 3, 4, die beispielsweise für eine Baugröße mit vorgegebenen Außendurchmessern ausgelegt sind und einen vorgegebenen Abstand zwischen den Vorsprüngen aufweisen, können bei größeren Gehäusedurchmessern im Bereich von Kühlrippen 12 montiert werden, die oberhalb eines größeren Gehäusedurchmessers angeordnet sind. Somit ist eine Haltevorrichtung für verschiedene Elektromotorgrößen anwendbar.

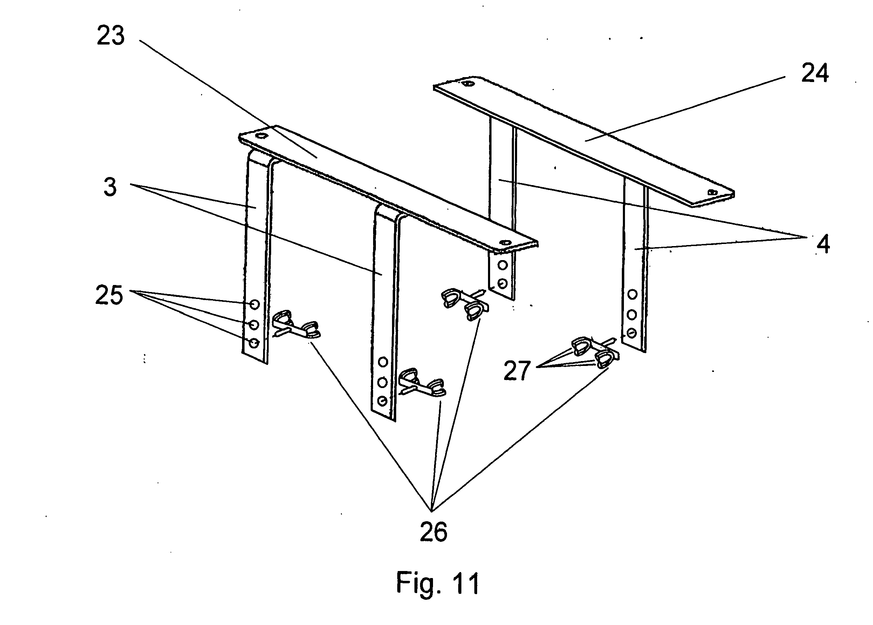

Fig. 11 zeigt eine weitere Haltevorrichtung. Im Unterschied zu vorangegangenen Figuren wird hier das Aufnahmeelement nur durch zwei Randstreifen 23 und 24 gebildet, wodurch sich eine Materialersparnis ergibt. Die Halteelemente 3, 4 weisen mehrere Befestigungsöffnungen 25 auf, die eine Befestigung von einander zugekehrten Vorsprüngen in Form von Klammerelementen 26 in unterschiedlichen Höhen ermöglicht. Die Klammerelemente 26 weisen Widerhaken 27 auf. Ebenso gut können die Klammerelemente 26 mit Ausstanzungen versehen sein. Die dadurch entstehenden Spitzen oder die Widerhaken krallen sich bei Montage der Halteelemente 3, 4 fest in die vorhandene Freiräume 13 des Elektromotors begrenzende Konturen, beispielsweise in die Motorkühlrippen. Dadurch wird eine zusätzliche Sicherung der Halteelemente 3, 4 am Elektromotor 5 erreicht.

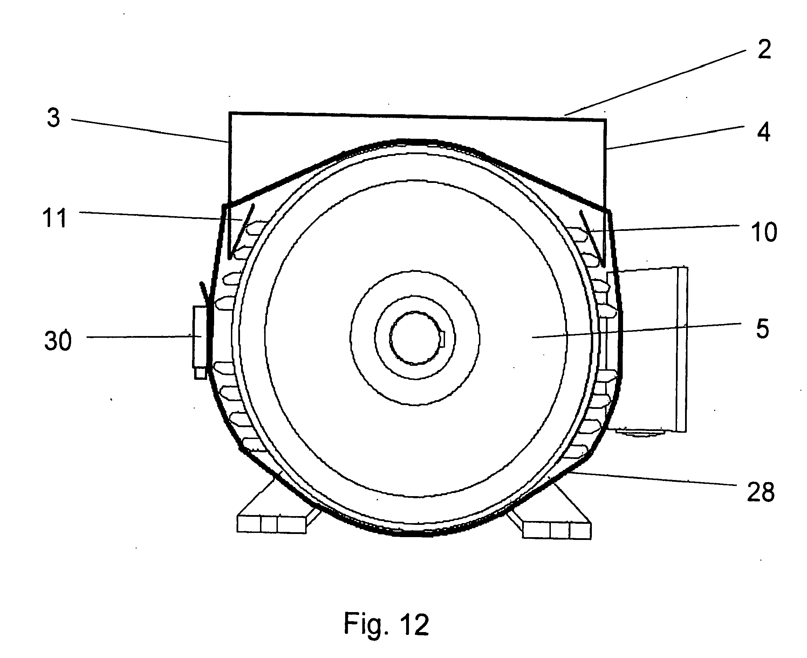

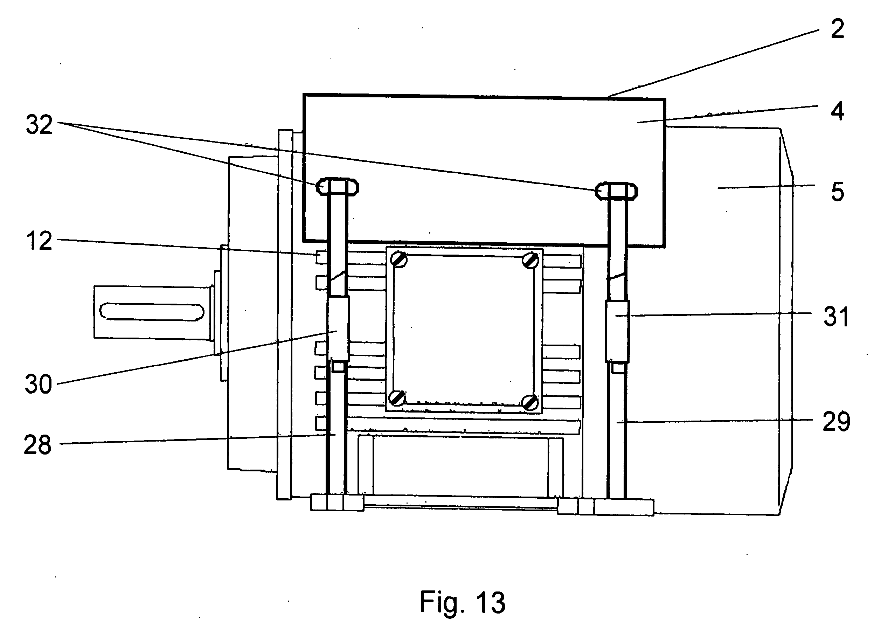

Fig. 12 und Fig. 13 zeigen eine weitere montierte Haltevorrichtung an einem Elektromotor 5. Dabei sind ein Aufnahmeelement 2 und Halteelemente 3, 4 an dem Elektromotor 5 befestigt. Die Halteelemente 3, 4 sind dabei einstückig mit dem Aufnahmeelement 2 ausgeführt und weisen leistenförmige Vorsprünge 11, 10 auf. Die Halteelemente sind mittels zweier Spannbefestigungen, bestehend aus um den Elektromotor 5 geführten Spannbändern 28, 29 und Spann-/Verbindungsmitteln 30, 31 an den Elektromotor 5 gezurrt. Die Halteelemente 3, 4 dienen in der gezeigten Anordnung als Abstandshalter. Sie weisen Aussparungen 32 zum Durchführen der Spannbänder 28, 29 auf. Spannbänder sind in verschiedenen Ausführungen und Größen verfügbar. Vorzugsweise können Stahl-Spannschellen mit Spannbackenzug oder Schneckengewinde zum Einsatz kommen. Es ergibt sich dadurch eine flexible und universelle, vom jeweiligen Elektromotor weistestgehend unabhängige Befestigungsoption für ein elektronisches Gerät an einem Elektromotor. Zur Verbesserung der Vibrationseigenschaften der Haltevorrichtung sind zwischen den Vorsprüngen 11, 10 der Halteelemente 3, 4 und den Motorkühlrippen 12 Dämpfungsmittel, beispielsweise aus Hartgummi, anordenbar.

## Patentansprüche

1. Elektromotorenaggregat mit einer Haltevorrichtung für die Befestigung eines elektronischen Geräts, insbesondere eines Frequenzumrichters, an einem luftgekühlten, mit Kühlrippen versehenen Elektromotor, insbesondere Normmotor, wobei zwischen Gerät und Elektromotor ein mit dem Gerät (1) verbundenes Aufnahmeelement (2) und mehrere, mit dem Aufnahmeelement (2) verbundene, am Elektromotor (5) anliegende Halteelemente (3, 4, 14) angeordnet sind, die den Abstand zwischen Gerät (1) und Elektromotor (5) überbrücken, wobei die Halteelemente (3, 4, 14) an und/oder in konstruktiven Freiräumen (9, 13) des Elektromotors (5) kräfteübertragend anliegen und die Halteelemente (3, 4) seitlich abstehende Vorsprünge (6, 10, 11, 21, 22, 26) aufweisen und dass bei montierten Halteelementen (3, 4) die Vorsprünge (6, 10, 11, 21, 22, 26) einander zugekehrt sind, **dadurch gekennzeichnet, dass** die Vorsprünge (6, 10, 11, 21, 22, 26) an den Kühlrippen (12) als begrenzende Konturen der Freiräume (13) anliegen oder die als Stiftelemente ausgebildeten Vorsprünge (6) in in Flächen (7) als Gewinde-Sacklöcher (9) ausgebildeten Freiräumen formschlüssig gehalten werden.

2. Elektromotorenaggregat nach Anspruch 1, **dadurch gekennzeichnet, dass** das Aufnahmeelement (2) rahmen- oder plattenförmig ausgebildet ist.

3. Elektromotorenaggregat nach Anspruch 1 oder 2, **dadurch gekennzeichnet, dass** das plattenförmige Aufnahmeelement (2) rasterförmig angeordnete Öffnungen (17, 18) unterschiedlicher Form zur Durchführung von Befestigungselementen aufweist.

4. Elektromotorenaggregat nach Anspruch 1, **dadurch gekennzeichnet, dass** die Vorsprünge (6, 10, 11, 21) in vorhandene Freiräume (9, 13) des Elektromotors (5) formschlüssig eingreifen.

5. Elektromotorenaggregat nach Anspruch 1 oder 4, **dadurch gekennzeichnet, dass** die Vorsprünge (6, 10, 11, 21, 22, 26) sich auf die Freiräume des Elektromotors begrenzende Konturen abstützen.

6. Elektromotorenaggregat nach Anspruch 4 oder 5, **dadurch gekennzeichnet, dass** die Vorsprünge (6, 10, 11, 21, 22, 26) als Leistenelemente (10, 11) ausgebildet sind.

7. Elektromotorenaggregat nach Anspruch 4 oder 5, **dadurch gekennzeichnet, dass** die Vorsprünge (6, 10, 11, 21, 22, 26) als ein oder mehrere Stift- (6) oder Zahnelemente (21) ausgebildet sind.

8. Elektromotorenaggregat nach Anspruch 4 oder 5, **dadurch gekennzeichnet, dass** die Vorsprünge (6, 10, 11, 21, 22, 26) als Klammerelemente (22, 26) ausgebildet sind.

9. Elektromotorenaggregat nach einem der Ansprüche 4 bis 8, **dadurch gekennzeichnet, dass** die Halteelemente (3, 4) mit den Vorsprüngen (6, 10, 11, 21) in Freiräume (13) zwischen Motorkühlrippen (12) eingreifen.

10. Elektromotorenaggregat nach Anspruch 9, **dadurch gekennzeichnet, dass** die Vorsprünge (6, 10, 11, 21) aus axialer Richtung in Freiräume (13) zwischen den Motorkühlrippen (12) eingeschoben sind.

11. Elektromotorenaggregat nach einem der Ansprüche 1 bis 10, **dadurch gekennzeichnet, dass** in Befestigungsöffnungen (9) des Elektromotors (5) eingreifende, selbstfurchende Schrauben die Halteelemente (3, 4) und/oder Sicherungslaschen (19) sichern.

12. Elektromotorenaggregat nach einem der Ansprüche 1 bis 11, **dadurch gekennzeichnet, dass** die Vorsprünge (6, 10, 11, 21, 22, 26) Widerhaken (27) oder Spitzen aufweisen.

## Claims

1. Electric motor assembly having a holding apparatus for fastening an electronic unit, in particular a frequency converter, to an air-cooled electric motor which is provided with cooling fins, in particular a standard motor, a receiving element (2) which is connected to the unit (1) and a plurality of holding elements (3, 4, 14) which are connected to the receiving element (2), bear against the electric motor (5) and bridge the spacing between the unit (1) and the electric motor (5) being arranged between the unit and the electric motor, the holding elements (3, 4, 14) bearing against and/or in structural clearances (9, 13) of the electric motor (5) in a force-transmitting manner, and the holding elements (3, 4) having laterally protruding projections (6, 10, 11, 21, 22, 26) and, when the holding elements (3, 4) are mounted, the projections (6, 10, 11, 21, 22, 26) facing one another, **characterized in that** the projections (6, 10, 11, 21, 22, 26) bear against the cooling fins (12) as delimiting contours of the clearances (13), or the projections (6) which are configured as pin elements are held in a positively locking manner in clearances which are formed in surfaces (7) as threaded blind holes (9).

2. Electric motor assembly according to Claim 1, **characterized in that** the receiving element (2) is of frame-shaped or plate-shaped configuration.

3. Electric motor assembly according to Claim 1 or 2, **characterized in that** the plate-shaped receiving element (2) has openings (17, 18) of different shape which are arranged in a grid-shaped manner in order to guide through fastening elements.

4. Electric motor assembly according to Claim 1, **characterized in that** the projections (6, 10, 11, 21) engage in a positively locking manner into existing clearances (9, 13) of the electric motor (5).

5. Electric motor assembly according to Claim 1 or 4, **characterized in that** the projections (6, 10, 11, 21, 22, 26) are supported on contours which delimit the clearances of the electric motor.

6. Electric motor assembly according to Claim 4 or 5, **characterized in that** the projections (6, 10, 11, 21, 22, 26) are configured as rail elements (10, 11).

7. Electric motor assembly according to Claim 4 or 5, **characterized in that** the projections (6, 10, 11, 21, 22, 26) are configured as one or more pin (6) or tooth elements (21).

8. Electric motor assembly according to Claim 4 or 5, **characterized in that** the projections (6, 10, 11, 21, 22, 26) are configured as clip elements (22, 26).

9. Electric motor assembly according to one of Claims 4 to 8, **characterized in that** the holding elements (3, 4) engage with the projections (6, 10, 11, 21) into clearances (13) between motor cooling fins (12).

10. Electric motor assembly according to Claim 9, **characterized in that** the projections (6, 10, 11, 21) are pushed from the axial direction into clearances (13) between the motor cooling fins (12).

11. Electric motor assembly according to one of Claims 1 to 10, **characterized in that** self-tapping screws which engage into fastening openings (9) of the electric motor (5) secure the holding elements (3, 4) and/or securing tabs (19).

12. Electric motor assembly according to one of Claims 1 to 11, **characterized in that** the projections (6, 10, 11, 21, 22, 26) have barbs (27) or tips.

## Revendications

1. Ensemble de moteur électrique comprenant un dispositif de retenue pour la fixation d'un appareil électronique, en particulier d'un convertisseur de fréquence, sur un moteur électrique refroidi par air et pourvu d'ailettes de refroidissement, en particulier un moteur de dimensions normales, un élément de réception (2) relié à l'appareil (1) et plusieurs éléments de retenue (3, 4, 14) s'appliquant contre le moteur électrique (5) et reliés à l'élément de réception (2) étant disposés entre l'appareil et le moteur électrique, lesquels éléments de retenue enjambent la distance entre l'appareil (1) et le moteur électrique (5), les éléments de retenue (3, 4, 14) s'appliquant contre et/ou dans des espaces libres de construction (9, 13) du moteur électrique (5) de manière à transmettre des forces, et les éléments de retenue (3, 4) comprenant des saillies latéralement protubérantes (6, 10, 11, 21, 22, 26), et les saillies (6, 10, 11, 21, 22, 26) étant tournées les unes vers les autres lorsque les éléments de retenue (3, 4) sont montés, **caractérisé en ce que** les saillies (6, 10, 11, 21, 22, 26) s'appliquent contre les ailettes de refroidissement (12) en tant que contours de délimitation des espaces libres (13), ou les saillies (6) réalisées sous forme d'éléments formant goupille sont maintenues par engagement par complémentarité de formes dans des espaces libres réalisés dans des surfaces (7) en tant que trous borgnes filetés (9).

2. Ensemble de moteur électrique selon la revendication 1, **caractérisé en ce que** l'élément de réception (2) est réalisé en forme de cadre ou en forme de plaque.

3. Ensemble de moteur électrique selon la revendication 1 ou 2, **caractérisé en ce que** l'élément de réception en forme de plaque (2) comprend des ouvertures (17, 18), disposées en forme de grille, de formes différentes pour le passage d'éléments de fixation.

4. Ensemble de moteur électrique selon la revendication 1, **caractérisé en ce que** les saillies (6, 10, 11, 21) s'engagent par complémentarité de formes dans des espaces libres existants (9, 13) du moteur électrique (5).

5. Ensemble de moteur électrique selon la revendication 1 ou 4, **caractérisé en ce que** les saillies (6, 10, 11, 21, 22, 26) s'appuient sur des contours délimitant les espaces libres du moteur électrique.

6. Ensemble de moteur électrique selon la revendication 4 ou 5, **caractérisé en ce que** les saillies (6, 10, 11, 21, 22, 26) sont réalisées sous forme d'éléments formant baguette (10, 11).

7. Ensemble de moteur électrique selon la revendication 4 ou 5, **caractérisé en ce que** les saillies (6, 10, 11, 21, 22, 26) sont réalisées sous forme d'un ou de plusieurs éléments formant goupille (6) ou dent (21).

8. Ensemble de moteur électrique selon la revendication 4 ou 5, **caractérisé en ce que** les saillies (6, 10, 11, 21, 22, 26) sont réalisées sous forme d'éléments formant pince (22, 26).

9. Ensemble de moteur électrique selon l'une quelconque des revendications 4 à 8, **caractérisé en ce que** les éléments de retenue (3, 4) pourvus des saillies (6, 10, 11, 21) s'engagent dans des espaces libres (13) entre des ailettes de refroidissement de moteur (12).

10. Ensemble de moteur électrique selon la revendication 9, **caractérisé en ce que** les saillies (6, 10, 11, 21) sont insérées à partir de la direction axiale dans des espaces libres (13) entre les ailettes de refroidissement de moteur (12).

11. Ensemble de moteur électrique selon l'une quelconque des revendications 1 à 10, **caractérisé en ce que** des vis autotaraudeuses s'engageant dans des ouvertures de fixation (9) du moteur électrique (5) fixent les éléments de retenue (3, 4j et/ou des pattes de fixation (19).

12. Ensemble de moteur électrique selon l'une quelconque des revendications 1 à 11, **caractérisé en ce que** les saillies (6, 10, 11, 21, 22, 26) comprennent des crochets (27) ou des pointes.
